# EUROPEAN PATENT APPLICATION

(11) **EP 2 832 691 A1**
(43) Date of publication of application: **04.02.2015**
(21) Application number: 13178781.4
(22) Date of filing: 31.07.2013
(51) Int. Cl.: C01B 33/18, C09D 7/12

(54) **Silica spheres**

(71) Applicant: Stichting Dutch Polymer Institute, 5612 AB Eindhoven (NL)
(72) Inventor: The designation of the inventor has not yet been filed
(74) Representative: Ishiguro, Masaoki

(57) **Abstract**

The invention is directed to a process for the preparation of the silica spheres comprising the following steps
a) Providing silica nanoparticles modified with a silane according to the formula (CH₃)ₙSiX₄₋ₙ wherein X is a hydrolysable group and n is 1, 2 or 3,
b) Dispersing the modified silica nanoparticles in water to form an aqueous dispersion with a pH between 8.5 and 10 or between 2 and 4, wherein the concentration of the modified silica nanoparticles is at least 0.5 wt%,
c) Mixing a hydrophobic liquid comprising polyethoxysiloxane (PEOS) with the aqueous dispersion to form a reaction mixture, wherein the amount of polyethoxysiloxane in the hydrophobic liquid is between 30 and 90 wt% based on the combined weight of the hydrophobic liquid and the polyethoxysiloxane,
d) Emulsifying the reaction mixture to prepare an oil-in-water type Pickering emulsion and
e) Allowing the PEOS in the emulsion to hydrolyze and condense at least 1 hour to form the silica spheres.

## Description

The invention is directed to a process for the preparation of silica spheres, the silica spheres and the use of silica spheres.

Silica spheres have attracted significant attention for their wide applications in nano vessels, drug delivery systems, photonic devices, catalysis, and pharmaceutics. The applications are all based on the unique properties of silica spheres, for example low toxicity, low density, high biocompatibility and biodegradability, enhanced thermal and mechanical stability, as well as large interiors and meso-structured shells. One of the significant challenges nowadays is to design and fabricate uniformly sized silica spheres with controllable size, shell thickness and structure for the encapsulation of chemicals and the manufacture of advanced materials in an economical way on a large scale.

Template-assisted methods using inorganic cores, polymer beads, emulsions, vesicles, polymeric micelles and even single crystals are state of the art techniques to prepare silica spheres. Although these preparation methods are quite flexible multistep operations, such as thermal decomposition and chemical dissolution of the hard cores, separation of complex components and unusual additives, need to be involved to purify the target products. This has a negative influence on the mechanical properties, stability and dispersibility of the final silica spheres in solvents. Besides, these approaches are not suitable for preparing silica spheres on a large scale due to the labor-intensive procedure.

Pickering emulsions were explored to design new core-shell structures such as colloidosomes in the past two decades. The preparation of all-silica colloidosomes is, for example, described in ACS Nano 2011, vol. 5, no. 5, p. 3937.

Further a publication in Advanced Materials 2012, vol. 25, no. 7, p.1017 discloses a process for the preparation of silica spheres which is based on the self-assembly of an amphiphilic silica precursor polymer (PEGylated hyperbranched polyethoxysiloxane (PEOS)) in water to form unilamellar vesicles and the subsequent basic condensation of the precursor polymer.

An improved process has been developed for the preparation of silica spheres. The process is characterized in that it comprises the following steps:
a) Providing silica nanoparticles modified with a silane according to the formula (CH₃)ₙSiX₄₋ₙ wherein X is a hydrolysable group and n is 1, 2 or 3,
b) Dispersing the modified silica nanoparticles in water to form an aqueous dispersion with a pH between 8.5 and 10 or between 2 and 4, wherein the concentration of the modified silica nanoparticles is at least 0.5 wt%,
c) Mixing a hydrophobic liquid comprising polyethoxysiloxane (PEOS) with the aqueous dispersion to form a reaction mixture, wherein the amount of polyethoxysiloxane in the hydrophobic liquid is between 30 and 90 wt% based on the combined weight of the hydrophobic liquid and the polyethoxysiloxane,
d) Emulsifying the reaction mixture to prepare an oil-in-water type Pickering emulsion and
e) Allowing the PEOS in the emulsion to hydrolyze and condense at least 1 hour to form the silica spheres.

According to the process of the invention, silica spheres are formed comprising a nanoporous shell consisting essentially of silicon dioxide. The silica spheres in the emulsion obtained by step e) further comprise the hydrophobic liquid inside the shell. The hydrophobic liquid may subsequently be removed to obtain hollow silica spheres.

The method according to the invention is inexpensive, environmentally friendly and can be scaled up easily. Further the process provides an easy and straightforward way to encapsulate additives in silica spheres.

A further advantage of the process according to the invention is that nanoporous silica spheres with a homogeneous and smooth surface can be prepared.

Another advantage is that silica spheres with a well-defined average particle size can be prepared.

The process according to the invention for the preparation of silica spheres comprises step a) wherein silica nanoparticles modified with a silane according to the formula (CH₃)ₙSiX₄₋ₙ wherein X is a hydrolysable group and n is 1, 2 or 3 are provided. The modified silica nanoparticles can be provided by modifying silica nanoparticles. Alternatively, the modified silica nanoparticles can be provided by isolating the modified silica nanoparticles from the emulsion obtained in step e). Accordingly, in some embodiments of the present invention, the process comprises steps a) to e), subsequently isolating the modified silica nanoparticles from the emulsion obtained in step e) and subsequently repeating steps b) to e). This is advantageous in that the modified silica nanoparticles are reused.

Examples of hydrolysable groups are halogen, alkoxy, amine, alkylcarbonyloxy, oxime, amide, aminoxy and isopropenoxy groups. The alkoxy group in these hydrolysable groups can contain from 1 to 10 carbon atoms, preferably from 1 to 5 carbon atoms. Examples of the alkoxy groups are methoxy, ethoxy, 1-methylethoxy, propoxy and 2-methylpropoxy groups. Preferably, the silane is chosen from the group consisting of chlorotrimethylsilane, methoxytrimethylsilane, ethoxytrimethylsilane, dichlorodimethylsilane, dimethoxydimethylsilane, diethoxydimethylsilane, trichloromethylsilane, trimethoxymethylsilane and triethoxymethylsilane; more preferably from the group consisting of ethoxytrimethylsilane, diethoxydimethylsilane and triethoxymethylsilane. The modified silica nanoparticles have both hydrophilic and hydrophobic groups on the surface. The surface of the modified silica nanoparticles can be wetted by water and a hydrophobic liquid.

The silica nanoparticles can be commercially obtained or can be synthesized, for example via a Stöber method. This method is described in J. Colloid Interf. Sci. 1968, Vol. 26, p. 62. The average particle size of the silica nanoparticles can range from 10 to 1000 nm, preferably from 20 to 800 nm, more preferably from 40 to 500 nm. The average particle size may be determined by Dynamic Light Scattering. This method is further explained in the Examples. The modification reaction is normally performed at room temperature, but may also be performed at higher temperatures up to a maximum of 100 ºC.

In step b) of the process for the preparation of silica spheres the modified silica nanoparticles are dispersed in water to form an aqueous dispersion with a pH between 8.5 and 10 or between 2 and 4. The concentration of silica nanoparticles in the aqueous dispersion is at least 0.5 wt%, preferably at least 0.7 wt%, more preferably at least 0.8 wt%. The concentration of silica nanoparticles must be high enough to be able to prepare an oil-in-water type Pickering emulsion. A higher amount of silica nanoparticles accelerates the formation of a Pickering emulsion. The concentration of silica nanoparticles in the aqueous dispersion is preferably at most 10 wt%, more preferably at most 5 wt%, most preferably at most 2 wt%.

When the pH is chosen between 2 and 4 silica spheres with an average particle size between 1000 and 4000 nm are prepared. Some modified silica nanoparticles may be attached to the silica shell of these spheres.

When the pH is between 8.5 and 10 silica spheres with a uniform size are prepared which have a shell that is substantially free of attached modified silica nanoparticles. Therefore, the use of a pH between 8.5 and 10 is preferred. The silica spheres that are formed when the pH is between 8.5 and 10 have an average particle size of 100 to 500 nm, preferably 200 to 450 nm, more preferably 300 to 400 nm. The average particle size may be determined by Dynamic Light Scattering. This method is further explained in the Examples.

In step c) of the process for the preparation of silica spheres a hydrophobic liquid comprising polyethoxysiloxane (PEOS) is mixed with the aqueous dispersion to form a reaction mixture. The hydrophobic liquid can be an oil or an organic liquid. Examples of oils that can be used are mineral oils and vegetable oils. Mineral oils are mixtures of alkanes comprising 15 to 40 carbon atoms from a non-vegetable origin. Examples are paraffinic oil, naphthenic oils and aromatic oils. Vegetable oils are triglycerides extracted from a plant or parts of a plant. Examples of vegetable oils are olive oil, rapeseed oil and cottonseed oil. Organic liquids are non-polar liquids. These liquids are water insoluble. Examples of organic liquids are toluene, acetone, alkanes, for example butane and hexane. Mixtures of hydrophobic liquids can be used. The hydrophobic liquid can contain an additive. The additive preferably is a hydrophobic additive. Examples of such additives are flavors, inks, biocides, insecticides, catalysts or catalyst components, monomers and drugs. The addition of an additive depends on the intended use of the silica spheres.

The polyethoxysiloxane (PEOS) can be commercially obtained or prepared. For example the preparation can be performed as described in Macromolecules 2006, vol. 39, p. 1701. The PEOS preferably has a silica content between 40 and 60 wt%. The PEOS preferably has an Mn of 300 to 10,000 g/mol, more preferably of 1000 to 5000 g/mol, most preferably of 1000 to 2000 g/mol, as measured by GPC in chloroform with evaporative light scattering detector calibrated using polystyrene standards. The amount of polyethoxysiloxane in the hydrophobic liquid is between 30 and 90 wt% based on the combined weight of the hydrophobic liquid and the polyethoxysiloxane, preferably between 40 and 70 wt%.

In step d) of the process for the preparation of silica spheres the reaction mixture is emulsified to prepare an oil-in-water type Pickering emulsion. An oil-in-water type Pickering emulsion is an emulsion comprising an aqueous continuous phase with oil droplets emulsified therein. The emulsion is stabilized by the modified silica nanoparticles which adsorb onto the interface between the water and the oil phase. According to the process of the invention the 'oil phase' in the Pickering emulsion is formed by the hydrophobic liquid comprising PEOS. The modified silica nanoparticles form, during the emulsification, a close-packed layer at the oil/water interface to hinder coalescence of adjacent droplets.

The emulsification can be performed by any method known to a person skilled in the art. Examples of emulsification methods are stirring or the use of ultrasound. The emulsification should be performed at such an intensity that a stable homogeneous oil-in-water emulsion (Pickering emulsion) is formed. The emulsification preferably is performed with high intensity.

In step e) of the process for the preparation of silica spheres PEOS present in the oil phase of the emulsion is allowed to hydrolyze and condense to form the silica shell to obtain the spheres. The hydrolysis of PEOS is initiated during the emulsification step d) and sufficient time is given for the formation of the silica shell in step e). This may be performed by leaving the emulsion formed by step d) e.g. at a room temperature. It was surprisingly found that the modified silica nanoparticles leave the surface of the shell after the hydrolysis of PEOS and formation of the silica shell, allowing the modified silica nanoparticles to be easily separated from the emulsion. This allows the modified silica nanoparticles to be re-used for the formation of the spheres according to the invention or other purposes.

The emulsion is preferably agitated, i.e., shaken or stirred with a low intensity, during this step e) in order to prevent the silica spheres to precipitate. The hydrolysis and condensation occur at the water/oil interface of the emulsion and is allowed for at least 1 hour to form the silica shell. The upper limit of the period of this step is not critical but may e.g. be 7 days. Typically the period of step e) is 1 to 4 days. The hydrolysis and condensation of PEOS take place at the water/oil interface and the silica shell that is formed around the oil droplets stabilizes the oil droplets in the aqueous phase. The hydrophobic liquid is located inside the silica sphere. The hydrolyzed PEOS forms a silicon dioxide shell that is nanoporous and allows low molecular weight compounds to diffuse through it.

After the silica spheres comprising the hydrophobic liquid are formed, the silica spheres can be isolated from the emulsion comprising the aqueous phase and the modified silica nanoparticles. Isolation can be performed by methods known by a person skilled in the art, for example by filtration, dialysis or by centrifugation. Preferably, isolation of the silica spheres is performed by centrifugation. After isolation of the silica spheres it is possible to remove the hydrophobic liquid in the silica spheres. The hydrophobic liquid can be removed because of the porosity of the silica spheres. The hydrophobic liquid can, for example, be removed by heating. The silica sphere that remains after the hydrophobic liquid is removed is a hollow silica sphere.

The modified silica nanoparticles isolated from the emulsion obtained in step e) may advantageously be re-used for the process according to the present invention.

The invention is also directed to silica spheres obtainable by the process according to the invention.

The invention is also directed to silica spheres with an average particle size between 100 and 4000 nm comprising a shell, wherein the shell consists essentially of silicon dioxide. A small amount of modified silica nanoparticles can be attached to the shell. This amount depends on the pH value of the aqueous phase during the reaction and is between 0 and 4 wt%. The wording 'consisting essentially of silicon dioxide' means that at least 98 wt% of the shell consists of silicon dioxide, preferably at least 99 wt%, more preferably at least 99.5 wt%. The silicon dioxide is formed by hydrolyzation of the ethoxy groups and subsequent condensation of PEOS at the interface of water and the hydrophobic liquid. The spheres are substantially ball shaped.

When the pH is chosen between 2 and 4 silica spheres with an average particle size between 1000 and 4000 nm are prepared. A small amount of modified silica nanoparticles can be attached to the shell. When the pH is between 8.5 and 10 silica spheres with a uniform size are prepared which have a shell that is substantially free of modified silica nanoparticles. Therefore, the use of a pH between 8.5 and 10 is preferred. The silica spheres that are formed when the pH is between 8.5 and 10 have an average particle size of 100 to 500 nm, preferably 200 to 450 nm, more preferably 300 to 400 nm. The average particle size is determined by Dynamic Light Scattering. This method is further explained in the Examples.

Preferably, the shell thickness of the silica sphere is 5 to 25 nm, more preferably 10 to 20 nm, most preferably 15 to 20 nm. The shell thickness of the silica spheres is determined with Transmission Electron Microscopy (TEM).

The spheres can comprise a hydrophobic liquid and/or an additive inside the shell. The additive can be present without hydrophobic liquid (after the removal of the hydrophobic liquid), but can also be dissolved in or mixed with the hydrophobic liquid. The silica spheres are nanoporous and allow (slow) release of encapsulated additives.

The invention is further directed to the use of the silica sphere according to the present invention for the encapsulation of an additive or as a component in a coating composition.

The silica spheres can be used for the encapsulation of an additive and are therefore suitable for a wide variety of uses that are connected to the use of the encapsulated additives in the spheres. Examples of such additives are flavors, inks, biocides, insecticides, monomers and drugs. The additive preferably is a hydrophobic additive, because in this way it can be easily incorporated in the silica sphere together with the hydrophobic liquid during preparation of the spheres. The additives can be (slowly) released from the silica spheres through the pores in the silicon dioxide shell and can also be released when the silicon dioxide shell is destroyed, for instance by chemical disintegration of the shell of the silica particle or by a mechanical force. Preferably, the additive is a drug.

The silica spheres can be hollow and can be used as a light-weight component in polymer and resin compositions. In this way, for instance, coating compositions can be formed. Because of the presence of the silica spheres the coating composition possesses anti-reflective properties. Preferably, the coating composition is an anti-reflective coating.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will now be elucidated by way of the following examples without however being limited thereto.

### EXAMPLES

### 1.1 Materials

Tetraethyl orthosilicate (TEOS, 99.8%), ammonia (NH₃·H₂O, 25%), absolute ethanol (EtOH, 99.8%), hydrochloric acid (HCl, 37%) and toluene (Tol, 99.8%) were purchased from VWR. Ethoxytrimethylsilane (ETMS, 98%) was provided by Sigma-Aldrich. Distilled water was used throughout the whole experiment.

### 1.2 Preparation of Methyl-Modified Silica Nanoparticles

A 500 ml flask was charged with 11.4 ml of TEOS, 17.0 ml of ammonia aqueous solution and 342 ml of absolute ethanol. The mixture was stirred at room temperature for 24 h. Thereafter, 30 µl of ETMS was added in order to partially hydrophobize the silica particles and additional 48 h of stirring were required. The particles were separated with an Eppendorf centrifuge 5810 (11000rpm, 30 min) and rinsed three times with water. Finally the particles were redispersed in water to yield a homogeneous silica aqueous dispersion. The silica nanoparticles had an average particle size of 50 nm.

### 1.3 Synthesis of Polyethoxysiloxane (PEOS)

PEOS was synthesized according to the literature (Macromolecules 2006, 39, 1701-1708). The resulting PEOS had a 49.2% silica content and a Mn of 1740 g mol-1.

### 1.4 Preparation of spheres

10 g of silica aqueous dispersion with a concentration of 1.2 wt % was mixed with 0.8 g of oil phase (0.4 g of PEOS and 0.4 g of toluene). The pH of the silica aqueous dispersion was 9.0. The mixture was emulsified by ultrasonic irradiation for 15 min (Branson Sonifier 450 cell disrupter, 3 mm microtip, 50% duty circle, amplitude 50%). The resulting stable oil in water emulsion was gently stirred at room temperature for 3 days. The spheres were isolated by centrifugation, rinsed 3 times with water, and then redispersed in water for further measurements. During centrifugation the modified silica nanoparticles were completely removed from the reaction mixture.

### 2.0 Determination Methods

### 2.1 Size and Zeta Potential

The hydrodynamic diameter and the zeta potentials of the silica nanoparticles were both measured with Dynamic Light Scattering (DLS) using a Malvern Zetasizer Nano Series. The stock dispersions were diluted to a constant concentration of 1.5wt ‰ in a polystyrene cell for size measurements at a scattering angle of 147°(at 25 °C) and in a universal dip cell in a polystyrene cuvette for ζ potential measurements (at 25 °C).

### 2.2 Interfacial Tension (IFT)

Interfacial tension between the aqueous phase and the oil phase was measured at room temperature with a DSA100 pendant-drop tensiometer (Krüss, Germany). Pendant drop method was used to determine the interfacial tension: a drop of silica nanoparticle dispersion, initially contained in a syringe (1 mL) equipped with a needle (diameter ∼1.8 mm), was pumped into the oil phase placed in an optical glass cuvette (10*10*45 mm).

### 2.3 Scanning Electron Microscopy (SEM)

SEM experiments were performed on a Hitachi S4800 high-resolution field emission scanning electron microscope with an accelerating voltage of 1.5 kV. Before measurements, the dispersion of the sphere was diluted to a desired concentration for spin coating on the silicon wafer, and air-dried under ambient conditions.

### 2.4 Transmission Electron Microscopy (TEM)

TEM experiments were carried out on a Zeiss Libra 120 TEM. The accelerating voltage was set at 120 kV. The samples were prepared by placing a drop of diluted dispersion of the silica spheres on a Formvar-carbon-coated copper grid with 200 meshes.

### 2.5 Fourier-Transform Infrared (FT-IR) Spectroscopy

The samples were dried at 45 °C overnight to remove the water. Measurements were then performed on a Nicolet 60 SXR FT-IR spectrometer using KBr pellet technique.

### 2.6 Thermo Gravimetric Analysis (TGA)

TGA measurements were conducted on a NETZSCH TG 209c unit operating under nitrogen atmosphere with a flow rate of 10 ml·min-1. The dispersions of the spheres were centrifuged and dried in the fume hood overnight, and then 5-10 mg of the sample was put in a standard NETZSCH alumina 85 µL crucible.

### 2.7 Gel Permeation Chromatography (GPC)

Mn was measured by GPC in chloroform with evaporative light scattering detector calibrated using polystyrene standards.

### Table A: Concentration of silica nanoparticles in the aqueous dispersion

In the preparation of the spheres (1.4 here above) the concentration of silica in the aqueous dispersion was varied. When no silica nanoparticles were added (Example A1) the pH was adjusted to pH 9 by the addition of an ammonia solution. The silica spheres that were obtained were analyzed by SEM and TEM. Examples A1, A2 and A3 are comparative examples.

| Example | Concentration of silica nanoparticles (wt%) | Sphere appearance |
|---|---|---|
| A1 | 0 | Collapsed sphere |
| A2 | 0.15 | Collapsed sphere |
| A3 | 0.3 | Collapsed sphere |
| A4 | 0.6 | Spheres with wrinkled surface |
| A5 | 1.2 | Spheres, size 300-400 nm |
| A6 | 1.8 | Spheres, size 150-200 nm |

### Table B: Amount of PEOS in toluene

In the preparation of the spheres (1.4 here above) the amount of PEOS relative to the amount of toluene was varied. The silica spheres that were obtained were analyzed by SEM and TEM. Examples B1 and B5 are comparative examples.

| Example | Amount of PEOS with respect to the combined weight of toluene and PEOS (wt%) | Sphere appearance |
|---|---|---|
| B1 | 25 | Incomplete sphere, thin shell |
| B2 | 37.5 | Sphere, thin shell |
| B3 | 50 | Sphere, mechanical stable |
| B4 | 75 | Sphere, thick shell |
| B5 | 100 | Sphere, thick shell, broad size distribution |

### Table C: Influence of the pH value

In the preparation of the spheres (1.4 here above) the pH of the aqueous dispersion was varied by the addition of ammonia solution or HCl solution. The silica spheres that were obtained were analyzed by SEM. Examples C1, C4, C5, C6 and C10 are comparative examples.

| Example | pH | Sphere appearance |
|---|---|---|
| C1 | 1.7 | Fused spheres |
| C2 | 2.3 | Spheres with size of 1.5-2.0 µm, particle covered surface |
| C3 | 3.0 | Spheres with size of 2.5-3.0 µm, particle covered surface |
| C4 | 4.3 | No spheres |
| C5 | 5.2 | No spheres |
| C6 | 7.0 | No spheres |
| C7 | 8.3 | Sphere aggregates |
| C8 | 9.0 | Spheres with a uniform size, 300-400 nm |
| C9 | 9.6 | Spheres with a uniform size, ∼ 300 nm |
| C10 | 10.1 | No spheres |

## Claims

1. Process for the preparation of the silica spheres comprising the following steps
a) Providing silica nanoparticles modified with a silane according to the formula (CH₃)ₙSiX₄₋ₙ wherein X is a hydrolysable group and n is 1, 2 or 3,
b) Dispersing the modified silica nanoparticles in water to form an aqueous dispersion with a pH between 8.5 and 10 or between 2 and 4, wherein the concentration of the modified silica nanoparticles is at least 0.5 wt%,
c) Mixing a hydrophobic liquid comprising polyethoxysiloxane (PEOS) with the aqueous dispersion to form a reaction mixture, wherein the amount of polyethoxysiloxane in the hydrophobic liquid is between 30 and 90 wt% based on the combined weight of the hydrophobic liquid and the polyethoxysiloxane,
d) Emulsifying the reaction mixture to prepare an oil-in-water type Pickering emulsion and
e) Allowing the PEOS in the emulsion to hydrolyze and condense at least 1 hour to form the silica spheres.

2. Process according to claim 1, wherein the polyethoxysiloxane has a silica content between 40 and 60 wt% and an Mn of 300 to 10,000 g/mol.

3. Process according to claim 1 or 2, wherein the silica spheres are isolated from the emulsion of step e).

4. Process according to any one of claims 1-3, wherein the silane is chosen from the group of chlorotrimethylsilane, methoxytrimethylsilane, ethoxytrimethylsilane, dichlorodimethylsilane, dimethoxydimethylsilane, diethoxydimethylsilane, trichloromethylsilane, trimethoxymethylsilane and triethoxymethylsilane.

5. Process according to any one of claims 1-4, wherein the concentration of silica nanoparticles in the aqueous dispersion is at most 10 wt%.

6. Process according to any one of claims 1-5, wherein the pH is between 8.5 and 10.

7. Process according to any one of claims 1-6, wherein the hydrophobic liquid contains an additive.

8. Silica sphere with an average particle size between 100 and 4000 nm comprising a shell consisting essentially of silicon dioxide.

9. Silica sphere according to claim 8, wherein the shell thickness is 5 to 25 nm.

10. Silica sphere according to claim 8 or 9, wherein the average particle size is between 100 and 500 nm.

11. Silica sphere according to any one of claims 8-10, wherein the sphere further comprises a hydrophobic liquid inside the shell.

12. Silica sphere according to any one of claims 8-11, wherein the sphere further comprises an additive inside the shell.

13. Use of a silica sphere according to any one of claims 8-12 or obtained by any one of claims 1-7, for the encapsulation of an additive or as a component in a coating composition.

14. Use according to claim 13, wherein the additive is a drug.

15. Use according to claim 13, wherein the coating composition is an anti-reflective coating.
